# EUROPEAN PATENT APPLICATION

(11) **EP 0 739 657 A1**
(43) Date of publication of application: **30.10.1996**
(21) Application number: 95934848.3
(22) Date of filing: 19.10.1995
(51) Int. Cl.: B07B 1/24

(54) **SEPARATION APPARATUS FOR SEPARATING AND RECOVERING VALUABLES FROM DEFECTIVE GOODS SUCH AS PAPER DIAPER, AND SEPARATION METHOD**

(30) Priority: 20.10.1994 JP 255522/94
(71) Applicant: KABUSHIKI KAISHA KOBE SEIKO SHO, Kobe-shi Hyogo-ken 651 (JP); Kabushiki Kaisha Samushingu, Kagawa-ken 768-01 (JP); Nisshin Shoji Kabushiki Kaisha, Kagawa-ken 768 (JP); Komoda, Rintaro, Kagawa-ken 799-01 (JP)
(72) Inventor: KOMODA, Rintaro, Ehime-ken 799-01 (JP); YOSHIOKA, Masashi Kobe Honsha, K.K. Kobe Seiko Sho, Hyogo-ken 651 (JP); TSUGE, Osamu Kobe Honsha, K.K. Kobe Seiko Sho, Hyogo-ken 651 (JP)
(74) Representative: Pellmann, Hans-Bernd, Dipl.-Ing.
(86) International application number: JP9502151
(87) International publication number: WO9612569

(57) **Abstract**

A casing 31 includes a rotational shaft 32, a cylindrical mesh unit 33 for surrounding the rotational shaft 32 and arranged to be rotated concentrically with the rotational shaft 32 in an opposite direction, a screw shaft 34 arranged below the cylindrical mesh unit 33, a circular-arc mesh unit 35 arranged below the screw shaft 34 so as to be slidable and in contact with the screw shaft 34, and a lower screw shaft 36 disposed below the circular-arc mesh unit 35, wherein a suction pipe for sucking the atmosphere in the casing 31 is connected to an upper portion of the casing 31, a plurality of stirring rods 32a are disposed on a surface of the rotational shaft 32, and the casing 31 has a defective loading port, a first separated-substance discharge port for discharging first separated substances, a second separated-substance discharge port for discharging second separated substances left in the circular-arc mesh unit 35 and a final separated-substance discharge port for discharging final separated substances conveyed by the lower screw shaft 36.

## Description

### Background Art

The present invention relates to a separation method and a separation apparatus for separating and recovering valuable substances, such as fibrous material of pulp and water absorption resin which can be reclaimed, from defectives generated in a process for manufacturing articles, such as paper diapers or sanitary napkins, to be worn for the purpose of absorbing excretions.

Hitherto, articles, to be worn for absorbing excretions (hereinafter referred to as "articles to be worn"), such as paper diapers and sanitary napkins, arranged to contain and absorb excretions to prevent outward leakage, have been composed of an internal member made of fibrous material, such as pulp, exhibiting excellent hygroscopicity, and a bag-shape external member for covering the outer surface of the internal member. Since articles to be worn of the foregoing type comprise components, a portion of which, in particular, fibrous material of which can be reclaimed, the fibrous material is separated and recovered from defectives if the defectives are generated during the manufacturing process.

The separation and recovery are performed as follows. That is, initially, the defectives are cut into pieces to make the internal member expose outside, followed by supplying the defectives in the foregoing state into an air flow. As a result, the fibrous material is unraveled and transferred by the air flow. A screen having meshes permitting only the fibrous material to pass through is provided at a position in the air flow so that the fibrous material is discharged and the external members are captured by the screen. Thus, the internal member and the external members are separated from one another. As a method of separating and recovering the fibrous material, such as pulp, from defectives of articles to be worn of the foregoing type, a structure disclosed in, for example, Japanese Patent Laid-Open No. 58-186615, has been known.

In recent years, so-called water absorption resin has been developed which is able to absorb water in a quantity which is hundreds of times the dead weight. Mixing of the water absorption resin into the fibrous material has been performed. The water absorption resin is in the form of about 0.1 mm to 1.5 mm granules, the fine granules being uniformly dispersed in the fibrous material, such as pulp. Since the water absorption resin of the foregoing type is expensive considerably, separation and recovery of the foregoing resin are of great economical value.

However, the conventional method disclosed in Japanese Patent Laid-Open No. 58-186615 has encountered a problem when small pieces of internal hydroscopic members pass through the meshes of the screen in that the water absorption resin accompanies the foregoing small pieces and the cut external members are discharged in a state where the water absorption resin is allowed to adhere and, therefore, the separation and recovery of the water absorption resin cannot substantially be performed.

If the water absorption resin absorbs water in the atmosphere during the separation step, the water absorption resin is caused to have stickiness and adheres to the meshes of the screen. The fibrous material sequentially allowed to adhere to the stuck water absorption resin, thus resulting in the meshes being clogged. As a result, there arises a problem in that screening cannot be performed.

The present invention was found to overcome the foregoing problems and an object of the present invention is to provide a separation method and a separation apparatus capable of, with a satisfactory yield, reliably separating and recovering fibrous material and water absorption resin contained in the internal member from defectives generated during a process of manufacturing articles to be worn, such as paper diapers or sanitary napkins.

### Disclosure of the Invention

To overcome the foregoing problems, the present invention employed the following structures.

That is, a separation and recovery apparatus according to the present invention is a separation and recovery apparatus which untangles material composed of a first component having first size and a second component having size larger than the size of the first component so as to separate and recover substances which can be reclaimed, the separation and recovery apparatus comprising: a cylindrical mesh unit rotatably disposed in a substantially horizontal direction; drive means for rotating the cylindrical mesh unit in a predetermined direction; stirring means disposed in the cylindrical mesh unit; a material supply unit for supplying the material from an end of the cylindrical mesh unit into the cylindrical mesh unit; a first separated-substance recovery unit for recovering first separated-substances from another end of the cylindrical mesh unit; and a second separated-substance recovery unit for recovering second separated-substances allowed to pass through meshes of the cylindrical mesh unit.

A separation and recovery method according to the present invention is a separation and recovery method of untangling material composed of a first component having first size and a second component having size larger than the size of the first component so as to separate and recover substances which can be reclaimed, the separation and recovery method comprising the steps of: supplying the material to a cylindrical mesh unit which is being rotated and which is disposed in a substantially horizontal direction from an end of the cylindrical mesh unit through a material supply unit; separating the material into first separated substances to be left in the cylindrical mesh unit and second separated substances to be allowed to pass through meshes of the cylindrical mesh unit while stirring the material due to rotations of the cylindrical mesh unit in a predetermined direction and stirring means disposed in the cylindrical mesh unit; recovering the first separated substances from another end of the cylindrical mesh unit by a first separated-substance recovery unit; and recovering the second separated substances by a second separated-substance recovery unit.

According to the foregoing separation and recovery apparatus and the separation and recovery method, the material composed of the first component and the second component is loaded into the cylindrical mesh unit through the material supply unit and the cylindrical mesh unit is rotated in a predetermined direction due to the operation of the drive means. Thus, the material in the apparatus is stirred by the stirring means so that the material is brought to a state where it is uniformly distributed on the internal surface of the cylindrical mesh unit. As a result, the first component is allowed to pass through the meshes of the cylindrical mesh unit so as to be effectively separated from the second component. The first separated substances left in the cylindrical mesh unit and mainly composed of the second component are recovered by the first separated-substance recovery apparatus, while the second separated substances composed of the first component is recovered by the second separated-substance recovery apparatus.

Since the foregoing separation apparatus has the structure such that the rotations of the cylindrical mesh unit and the inside stirring means stir the material loaded into the cylindrical mesh unit as described above, the component separation can effectively be performed due to their synergistic effects. Thus, the foregoing apparatus is effective to reliably and quickly separate and recover components having different sizes.

Another structure may be employed which further comprises: a casing for surrounding the cylindrical mesh unit; suction means for sucking air in the casing; and a rotational shaft disposed concentrically to pass through the cylindrical mesh unit and made to be rotatable around an axis thereof, wherein the stirring means has a plurality of stirring rods radially provided for the rotational shaft to run the full length of the rotational shaft in the lengthwise direction of the rotational shaft, and the casing has a material loading port for loading the material to an upstream position in the cylindrical mesh unit, and is provided with, at a downstream position, a first separated-substance discharge port for discharging the first separated substances and a second separated-substance discharge port for discharging the second separated substance allowed to pass through the meshes of the cylindrical mesh unit.

As a result, dust generated in the cylindrical mesh unit is sucked and removed by the suction means and substances, which can be reclaimed, can be taken out from the sucked and removed dust. Since the stirring means has the plural stirring rods disposed radially to run the full length of the rotational shaft in the lengthwise direction of the same, the material sequentially loaded through the material loading port is moved toward the first separated-substance discharge port due to the rotations of the stirring rods. Since only the second separated substances pass through the meshes of the cylindrical mesh unit during the foregoing movement, separation can efficiently be performed.

Another structure may be employed in which the casing includes a screw shaft disposed below the cylindrical mesh unit and capable of rotating around an axis thereof, a circular-arc mesh unit arranged to run the full length of the screw shaft so as to be slidable and in contact with the lower portion of the screw shaft and conveyance means disposed below the circular-arc mesh unit, the second separated-substance discharge port is formed at a downstream end of the circular-arc mesh unit, size of meshes of the circular-arc mesh unit is set to be smaller than size of meshes of the cylindrical mesh unit, and the casing has a third separated-substance discharge port for discharging third separated-substances which are allowed to pass through the meshes of the cylindrical mesh unit and are conveyed by the conveyance means.

As a result, the second separated substances allowed to pass through the meshes of the cylindrical mesh unit are again screened by the circular-arc mesh unit to enable the third separated substances allowed to pass through the meshes to be recovered.

If the stirring rods are spirally disposed around the outer surface of the rotational shaft, the material supplied into the cylindrical mesh unit can be stirred in the cylindrical mesh unit by the stirring rods due to the rotations of the rotational shaft around its axis. Thus, the material is guided by the configuration of the stirring rods along the spiral locus so that the material is moved from the upstream position to the downstream position. Therefore, the necessity of providing a slope formed downwards toward the downstream position for the cylindrical mesh unit or an individual mechanism for moving the material can be eliminated. Thus, an advantage can be obtained in reducing the cost of the facility.

If the circumference of the rotational shaft is longer than the length of the material, the material introduced into the cylindrical mesh unit is not wound around the rotational shaft. Thus, clogging occurring due to winding of the material around the rotational shaft can be prevented. Therefore, clogging occurring in the cylindrical mesh unit can be significantly prevented.

Another separation and recovery method according to the present invention comprises a preliminary processing step for subjecting the material, which is loaded into the cylindrical mesh unit, to a preliminary processing; a separation step for separating the material by the cylindrical mesh unit; and a recovery step for recovering the first separated substances and the second separated substances separated in the separation step, wherein, in the preliminary processing step the material and external members covering the material are cut to have predetermined size and cut substances are introduced into the separation step by air flow transportation, in the separation step the cut substances are loaded from an end of the cylindrical mesh unit to separate the cut substances into first separated substances mainly composed of the first component and second separated substances composed of the second component and the external member, and then the second separated substances obtained by the separation are further screened to remove the second component mixed with the second separated substances, and in the recovery step the first component and the second component separated in the separation step are individually taken out by air flow transportation so as to be recovered by collecting means.

As a result of the foregoing separation and recovery method, the cut substances supplied from the preliminary processing step are loaded into the cylindrical mesh unit in a state where the rotational shaft in the casing is rotated in a predetermined direction around its axis and the cylindrical mesh unit surrounding the rotational shaft is rotated in the opposite direction around its axis so that the cut substances are sequentially moved downstream while being stirred by the stirring rods. The material is, during the foregoing movement, caught by the stirring rods, which are being rotated, and, therefore, moved upwards so as to be struck against the internal surface of the cylindrical mesh unit, which is being rotated in the opposite direction. As a result, the first component and the second component in the external members are forcibly ejected. During the foregoing process, the external members are not cut finely but only the internal first and second components are separated from the external members and forcibly ejected into air. The ejected first and second components collide with the stirring rods and the cylindrical mesh unit, which is being rotated inversely, so that they are sequentially untangled. As a result, the first component is allowed to pass through the meshes of the cylindrical mesh unit and fall downwards, followed by being discharged through the second separated-substance discharge port. The ripped-off external members and the second component, which has not allowed to pass through the meshes, are sequentially moved downstream as the first separated substances, and then discharged to the outside of the casing through the first separated-substance discharge port.

By rotating the cylindrical mesh unit around its axis, force acts on the material due to the rotations of the cylindrical mesh unit when the material has reached the mesh portion. Moreover, collisions of the contents take place actively, thus resulting in that the material cannot be allowed to adhere to the meshes.

In the case where the first component is water absorption resin and the second component is fibrous material, even if water in air is absorbed causing the first component to have stickiness and therefore the second component is allowed to adhere to the first component causing clogging to take place, the rotations of the cylindrical mesh unit cause the second component to be naturally dropped due to gravity when the clogged portion has reached a position adjacent to the top end of the cylindrical mesh unit. Thus, clogging can effectively be prevented.

By rotating the cylindrical mesh unit in a direction opposite to the direction of the rotation of the stirring rods around their axis, clogging of substances processed in the cylindrical mesh unit can reliably be prevented. The reason for this is as follows: that is, a state is sometimes realized in which the processed substances are held between the leading ends of the stirring rods and the internal surface of the cylindrical mesh unit. In the case where the cylindrical mesh unit and the stirring rods are rotated in the same direction, force for suspending the foregoing state of holding cannot easily act on the processed substances. In the case where the cylindrical mesh unit and the stirring rods are rotated in the opposite directions, forces in the opposite directions act on the held and processed substances so that the clogged state is reliably suspended.

The first component and the second component separated in the foregoing separation step are finally individually taken out by air flow transportation so as to be recovered by collection means.

By rotating the cylindrical mesh unit and the stirring rods in the opposite directions, colliding and stirring effect acting on absorbable members separated from the external members is made to be significant. Thus, the water absorption resin entwined around the fibrous material can reliably be removed.

Therefore, employment of the foregoing separation and recovery method results in the efficiency in separating and recovering substances, which can be reclaimed, by untangling the material being improved. Moreover, granular substances, which have been considered to be difficult to be separated and which are mixed in the fibrous material, can reliably be separated and recovered. By reclaiming the recovered substances, the serviceable source can effectively be used, thus resulting in an advantage being realized.

In the case where the foregoing separation method is arranged such that the first component which is discharged from the cylindrical mesh unit and is allowed to adhere to the cut substances of the external members is separated and fed back to the separation step by air flow transportation, also the first component allowed to adhere to the external members can be recovered. Therefore, the recovery efficiency can conveniently be improved.

In the case where the foregoing separation method is arranged such that circumferential velocity of the stirring rods is set to be within a range of 2.0 to 25 m/sec and circumferential velocity of the cylindrical mesh unit is set to be within a range of 0.1 to 1.5 m/sec, a problem can be prevented which takes place in the case where the circumferential velocity is lower than 2.0 m/sec in that the velocity is too low to reliably untangle the cut substances in the cylindrical mesh unit. Moreover, another problem can be prevented which takes place in the case where the circumferential velocity is higher than 25 m/sec in that the cut substances entwined around the stirring rods cannot be removed, the cut substances cannot reliably be moved downstream, and a clogging phenomenon takes place in the cylindrical mesh unit. If the circumferential velocity is very high, a problem takes place in that the cut substances, which have not been untangled, are allowed to pass through the cylindrical mesh unit and moved to the first separated-substance discharge port without being separated. The foregoing problem can be prevented so that the cut substances in the cylindrical mesh unit can appropriately and reliably be untangled and sequentially moved downstream. Therefore, advantages can be realized in that the separation apparatus can reliably be operated and the separation efficiency can be improved.

### Brief Description of the Drawings

Fig. 1 is a flow sheet showing a first embodiment of the separation method according to the present invention;
Fig. 2 is a flow sheet showing a second embodiment of the separation method according to the present invention;
Fig. 3 is a partially-broken perspective view showing an example of a two-step separating machine;
Fig. 4 is a cross sectional view taken along line A-A shown in Fig. 3;
Fig. 5 is a cross sectional view taken along line B-B shown in Fig. 4;
Fig. 6 is a horizontal cross sectional view showing an example of a single-step separating machine;
Fig. 7 is a cross sectional view taken along line C-C shown in Fig. 6; and
Fig. 8 is a horizontal cross sectional view showing another example of the single-step separating machine.

### The Best Mode for Carrying Out the Invention

In this embodiment, when valuable substances are separated and recovered from defectives of paper diapers or the like, which are articles to be worn on the body for sanitary, the separating and recovering apparatus and the separating and recovering method according to the present invention are applied. The articles to be worn (material composed of a first component and a second component), applied as the subjects to be processed in the present invention, are not limited to the foregoing paper diapers if paper, unwoven fabric or a synthetic resin sheet is employed as the external member and the internal member composed of a fibrous material (the second component), such as pulp, and the water absorption resin (the first component), is covered with the external member. Sanitary napkins, members for wiping the skin, bedding, mats and the like may be employed as the subject to be processed. In a case where the fibrous material, such as pulp, and the external members are separated from an internal member containing no water absorption resin, the separation apparatus and the separation method according to the present invention may be applied.

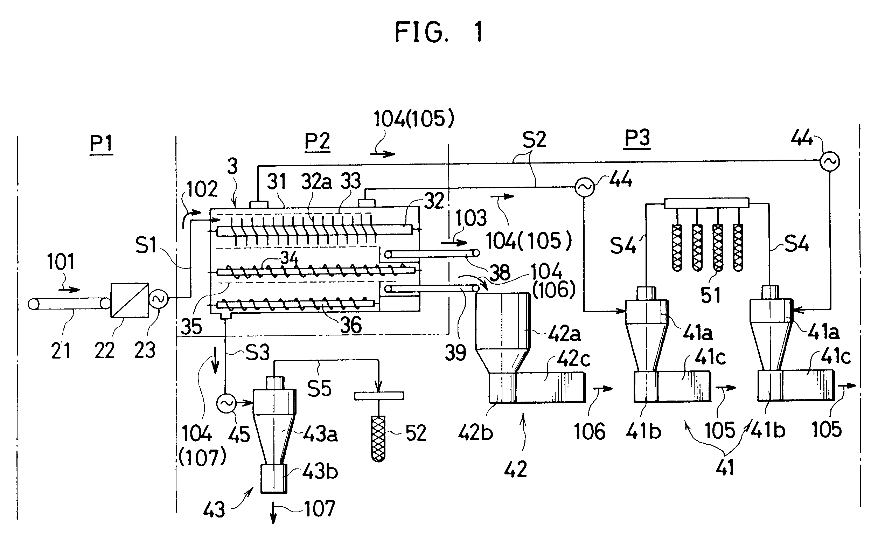

Fig. 1 is a flow sheet showing a first embodiment of a separation method according to the present invention for separating and recovering valuable substances from defectives of, for example, paper diapers. As shown in Fig. 1, the separation method according to the present invention comprises a cutting step (a preliminary processing step) P1 for cutting defectives (material composed of the first component, the second component and the external member) 101 of the articles to be worn into pieces having predetermined size, a separation step P2 for separating cut members 102 cut in the cutting step P1 into external members 103 and internal members 104 and a recovery step P3 for recovering the internal members 104 separated in the separation step P2.

The foregoing cutting step P1 is provided with a conveyor 21 for conveying the defectives 101, a cutting machine 22 for cutting the defectives 101 conveyed by the conveyor 21 and an air blower 23 disposed downstream from the cutting machine 22. The defectives 101 loaded by the conveyor 21 are cut to have predetermined size by the cutting machine 22, followed by being allowed to pass through a first air-flow pipe S1 disposed downstream from the cutting machine 22, and then transferred to the separation step P2 when the air blower (a material supply apparatus) 23 is operated.

The separation step P2 is provided with a two-step separating machine 3. The two-step separating machine 3 comprises a casing 31 including a separating space and elongated in the lateral direction, a rotational shaft 32 disposed in the upper portion of the casing 31 in the lengthwise direction and arranged to be rotated around the axis thereof by a drive means (not shown), a cylindrical mesh unit 33 arranged to be rotated concentrically with the rotational shaft 32 in a direction opposite to the direction of rotation of the rotational shaft 32 by a drive means (not shown), a screw shaft (a second separated-substance recovery apparatus) 34 disposed below the cylindrical mesh unit 33 in the lengthwise direction and arranged to be rotated around an axis thereof by a drive means (not shown), a circular-arc mesh unit 35 disposed below the screw shaft 34, a lower screw shaft (a third separated-substance recovery apparatus and conveyance means) 36 disposed below the circular-arc mesh unit 35 and arranged to be rotated around an axis thereof by a drive means (not shown) and a pair of second air-flow pipes S2 disposed at appropriate positions in the top portion of the casing 31 for sucking the atmosphere in the casing 31 by air flow transportation.

The casing 31 has, in the upstream portion thereof a defective loading port (a material loading port) for introducing the cut members 102 supplied from the cutting step P1 and, in the downstream portion thereof a first separated-substance discharge port for discharging the external members 103. Moreover, a second separated-substance discharge port for discharging intermediate-grade fibrous material 106 contained in the separated internal members 104 and to be described later is disposed below the first separated-substance discharge port of the casing 31. In addition, a third separated-substance discharge port is disposed in the bottom portion of the casing 31 for discharging separated water absorption resin (third separated-substance) 107 to be described later.

The size of the rotational shaft 32 is determined to have a circumference longer than the lengths of the cut members 102. If the size of the thus-arranged rotational shaft 32 is determined to have the circumference longer than the lengths of the cut members 102, the defectives 102 introduced into the cylindrical mesh unit 33 cannot be wound around the outer surface of the rotational shaft. Thus, generation of clogging due to winding of the defectives 102 around the rotational shaft 32 can effectively be prevented.

A plurality of stirring rods 32a are spirally disposed around the outer surface of the rotational shaft 32. At a downstream end from the cylindrical mesh unit 33, there is disposed an upper conveyor belt (a first separated-substance recovery apparatus) 38 for discharging the substances discharged from the cylindrical mesh unit 33 to the outside of the casing 31. At a position downstream from the screw shaft 34, there is disposed a lower conveyor belt 39 for conveying the substances discharged from the screw shaft 34 to the recovery step P3. At a downstream end of the lower screw shaft 36 in the bottom portion in the casing 31, there is disposed a third air-flow pipe S3 for, by air flow transportation, sucking the substances discharged by the lower screw shaft 36.

The meshes of the cylindrical mesh unit 33 are determined to be of the size which permits the fibrous material of the untangled internal members to pass through. The meshes of the circular-arc mesh unit 35 are determined to be of the size which is smaller than the meshes of the cylindrical mesh unit 33 and which is slightly larger than the particle size of the water absorption resin of the internal member to narrowly permit the water absorption resin to pass through.

Therefore, while the cut members 102 introduced into the cylindrical mesh unit 33 disposed in the casing 31 of the two-step separating machine 3 being stirred upwards and downwards along the internal surface of the cylindrical mesh unit 33 due to rotations of the rotational shaft 32 having the stirring rods 32a and the cylindrical mesh unit 33 in the opposite directions and being guided by the plurality of the stirring rods 32a, the cut members 102 are moved downstream.

During the foregoing movement, the cut members 102 are untangled into pieces so that fine high-grade fibrous material 105 in the internal members 104 is transferred through the second air-flow pipes S2. The residual fibrous material and the water absorption resin (the second separated-substances) are allowed to pass through the meshes of the cylindrical mesh unit 33, followed by being dropped on the lower circular-arc mesh unit 35. The external members 103 left in the cylindrical mesh unit 33 are discharged to outside of the system from the downstream end of the cylindrical mesh unit 33 through the upper conveyor belt 38.

The fibrous material and the water absorption resin which are caused to fall on the circular-arc mesh unit 35 are, due to rotations of the screw shaft 34, moved downstream. During this, only the water absorption resin 107 is allowed to pass through the meshes of the circular-arc mesh unit 35, followed by being caused to fall on the lower screw shaft 36 and moved to the downstream end due to rotations of the lower screw shaft 36, and followed by being supplied to a next step through the third air-flow pipe S3. On the other hand, the intermediate-grade fibrous material 106 left on the circular-arc mesh unit 35 and containing a certain amount of the water absorption resin is supplied from the downstream end of the screw shaft 34 to the lower conveyor belt 39, followed by being discharged to the next step.

In the recovery step P3, there are provided a pair of balers 41 connected to each of the foregoing second air-flow pipes S2, a baler 42 for receiving substances supplied from the lower conveyor belt 39 to bale the substances, and a recovering machine 43 connected to the third air-flow pipe S3. Each of the second air-flow pipes S2 has a suction blower 44. When the suction blowers 44 are operated, the atmosphere in the casing 31 passes, while accompanying the high-grade fibrous material 105, through the second air-flow pipes S2, followed by being pushed and supplied into the balers 41.

Each of the balers 41 comprises a bowl-like cyclone portion 41a, a compressing portion 41b connected to the bottom portion of the cyclone portion 41a and a packaging portion 41c connected to the compressing portion 41b. Thus, the high-grade fibrous material 105 contained in the air flow and captured by the cyclone portion 41a is compressed and reduced in capacity so as to be formed into a rectangular parallelepiped shape in the compressing portion 41b formed below the cyclone portion 41a, followed by being automatically packaged in the packaging portion 41c so as to be discharged to the outside of the system.

A fourth air-flow pipe S4 extends from each of the cyclone portion 41a. At an intersection of the fourth air-flow pipes S4, a dust collecting machine 51in the form of a bag is disposed to collect fine fibrous material which has not been captured in the cyclone portion 41a. Also the fibrous material collected in the bag dust collecting machine 51 is reclaimed as separated substances.

The baler 42 recovers the intermediate-grade fibrous material 106 discharged from the screw shaft 34 in the two-step separating machine 3 by the lower conveyor belt 39 and comprises a hopper 42a for receiving the intermediate-grade fibrous material 106 supplied from the lower conveyor belt 39, a pressing portion 42b disposed below the hopper 42a and a packaging portion 42c connected to the compressing portion 42b. The intermediate-grade fibrous material 106 supplied to the hopper 42a through the lower conveyor belt 39 is compressed and reduced in size in the compressing portion 42b so as to be formed into rectangular parallelepiped shape having predetermined size, followed by being packaged in the packaging portion 42c so as to be discharged to the outside of the system.

The recovering machine 43 comprises a cyclone portion 43a and an accumulating portion 43b disposed bellow the cyclone portion 43a. On the other hand, a suction blower 45 is provided for the third air-flow pipe S3, the suction blower 45 being arranged to introduce the water absorption resin (the third separated-substances) 107, transported from the bottom portion of the two-step separating machine 3 due to air flow transportation, into the cyclone portion 43a. At the top end of the cyclone portion 43a, there is extended a fifth air-flow pipe S5. At an end of the fifth air-flow pipe S5, there is disposed a bag dust collecting machine 52 including a collecting bag.

Therefore, the water absorption resin 107, allowed to pass through the third air-flow pipe S3 from the bottom portion of the two-step separating machine 3 and introduced into the cyclone portion 43a due to the operation of the suction blower 45, is captured onto the inner wall of the cyclone portion 43a due to centrifugal force generated by the circular movement of the air flow, followed by being accumulated in the lower accumulating portion 43b, and followed by being cut out as desired so as to be discharged to the outside. The fine fibrous material allowed to adhere to the water absorption resin 107 is discharged from the top end of the cyclone portion 43a through the fifth air-flow pipe S5, and then collected and captured by the bag dust collecting machine 52.

Since the separation method according to the first embodiment is structured as described above, the defectives 101 introduced into the cutting step P1 are initially supplied to the cutting machine 22 by the conveyor 21 so as to be cut into pieces having predetermined size and brought into a state where the internal members are exposed. Simultaneously, the air blower 23, suction blower 44 and the suction blower 45 are operated so that air blow of the air blower 23 and attracting forces of the blowers 44 and 45 realize a state where air flows for air flow transportation are formed in the first air-flow pipe S1, the two-step separating machine 3, the second air-flow pipes S2 and third air-flow pipe S3. Moreover, the two-step separating machine 3, balers 41, the baler 42 and the recovering machine 43 are brought into operating states.

After an air flow has been formed in the foregoing first air-flow pipe S1, the cut members 102 are supplied from the cutting machine 22 to the first air-flow pipe S1. As a result, the cut members 102 are accompanied by the air flow and moved in the first air-flow pipe S1 so as to be supplied into the casing 31 from the upstream portion of the two-step separating machine 3. The casing 31 includes the rotational shaft 32, having a multiplicity of the stirring rods 32a disposed spirally, and the cylindrical mesh unit 33 surrounding the rotational shaft 32 and arranged to be rotated concentrically to the rotational shaft 32 in the opposite direction. The cut members 102 are supplied to the cylindrical mesh unit 33 having the foregoing structure. Therefore, the cut members 102 in the cylindrical mesh unit 33 are sufficiently stirred and struck one another due to rotations of the cylindrical mesh unit 33 and the stirring rods 32a so that the internal members are protruded from the external members of the cut members 102. Moreover, the inside portion of the casing 31 is shrouded in dust composed of fine fibrous material due to the stirring and untangling operation.

While being guided by the stirring rods 32a disposed spirally, the cut members 102 in the foregoing state are moved downstream through the cylindrical mesh unit 33. Thus, dust composed of the foregoing fibrous material is, as the high-grade fibrous material 105, discharged while accompanying the air flow in the second air-flow pipes S2. Moreover, coarse fibrous material and the water absorption resin are allowed to pass through the meshes of the cylindrical mesh unit 33, followed by being caused to fall onto the lower portion. The residual portion of the external members 103, which has been ripped off, is discharged from the end of the downstream position of the cylindrical mesh unit 33, and then discharged to the outside of the system through the upper conveyor belt 38.

The water absorption resin and the coarse fibrous material allowed to pass through the meshes of the cylindrical mesh unit 33 are caused to fall onto the circular-arc mesh unit 35 so as to be moved downstream while being stirred by the screw shaft 34 which is rotated around the axis thereof at a position above the circular-arc mesh unit 35. Since the meshes of the circular-arc mesh unit 35 are determined to permit the water absorption resin 107 to narrowly pass through, only the water absorption resin 107 is allowed to pass through the meshes and dropped onto the lower portion. The residual intermediate-grade fibrous material 106 is supplied from the downstream end of the circular-arc mesh unit 35 to the lower conveyor belt 39, and then discharged to the outside of the two-step separating machine 3. On the other hand, the water absorption resin 107 allowed to pass through the meshes of the circular-arc mesh unit 35 is dropped onto the bottom portion of the casing 31, and then discharged from the downstream end with the air flow into the third air-flow pipe S3 due to the rotations of the lower screw shaft 36 around the axis thereof.

The high-grade fibrous material 105 in the casing 31 discharged into the second air-flow pipes S2 with the air flow is discharged into the cyclone portions 41a of the balers 41 through the suction blower 44, and then subjected to centrifugal separation. The high-grade fibrous material 105 captured onto the internal surface of the cyclone portion 41a is caused to fall and supplied to the compressing portion 41b disposed below the cyclone portion 41a so as to be subjected to a predetermined capacity reduction step, followed by being packaged in the packaging portion 41c so as to be discharged to the outside of the system as the recovered high-grade fibrous material 105. Note that dust composed of fine fibrous material generated in the cyclone portion 41a is supplied and captured by the dust collecting machine 51 through the fourth air-flow pipe S4. Also the captured dust is, as the high-grade fibrous material 105, individually recovered.

The intermediate-grade fibrous material 106 conveyed by the lower conveyor belt 39 and supplied from the circular-arc mesh unit 35 of the two-step separating machine 3 is thrown into the hopper 42a of the baler 42, followed by being subjected to a predetermined capacity-reduction step in the pressing portion 42b disposed below the hopper 42a, and then packaged in the packaging portion 42c so as to be discharged to the outside of the system as the recovered intermediate-grade fibrous material 106.

The water absorption resin 107 introduced into the third air-flow pipe S3 by the lower screw shaft 36 disposed in the bottom portion of the two-step separating machine 3 is introduced into the cyclone portion 43a of the recovering machine 43 so that the water absorption resin 107 having a large specific gravity is separated onto the internal surface of the cyclone portion 43a due to centrifugal separation, and then sequentially slid downwards so as to be accommodated in the accumulating portion 43b as well as discharged to the outside of the system as the recovered water absorption resin 107 at appropriate timing. The fine fibrous material allowed to adhere to the outer surface of the water absorption resin 107 is separated from the water absorption resin 107 in the swirling air flow in the cyclone portion 43a so as to be allowed to pass through the fifth air-flow pipe S5, and then supplied to and captured by the bag dust collecting machine 52. The captured fibrous material is, as the intermediate-grade fibrous material, individually recovered.

As described above, the separation method according to the present invention comprises the cutting step P1 provided with the cutting machine 22, the separation step P2 provided with the two-step separating machine 3 and the recovery step P3 provided with the balers 41, the baler 42 and the recovering machine 43. The steps are connected sequentially by the air-flow pipes S1, S2, S3, S4 and S5 to perform predetermined processes while transporting the cut members 102 with the air flow.

In particular, the foregoing two-step separating machine 3 is formed into the two-step structure comprising the cylindrical mesh unit 33 arranged to be rotated around the axis thereof and the circular-arc mesh unit 35 disposed below the cylindrical mesh unit 33. In the cylindrical mesh unit 33, the cut members 102 are stirred and untangled due to rotations of the rotational shaft 32 having the stirring rods 32a arranged to be rotated concentrically and in the opposite direction. Moreover, dust generated due to stirring and untangling operation is recovered as the high-grade fibrous material 105. The water absorption resin 107 and the fibrous material accompanying the water absorption resin 107, which have allowed to pass through the meshes of the cylindrical mesh unit 33, are, in the circular-arc mesh unit 35 disposed below the cylindrical mesh unit 33, screened while being stirred by the screw shaft 34. Therefore, the water absorption resin 107, which is uniformly mixed within the fibrous material of the internal members 104, and which has therefore been considered to be difficult to be separated, can reliably be separated.

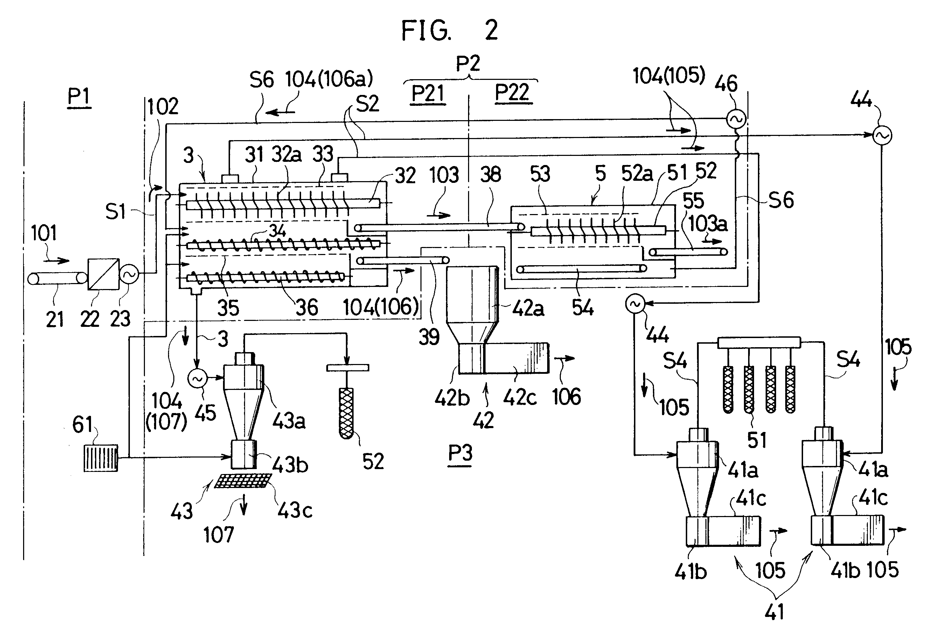

Fig. 2 is a flow sheet showing a second embodiment of the separation method according to the present invention. In this embodiment, the separation step P2 is divided into a first separation step P21 to which the two-step separating machine 3 is applied; and a second separation step P22 to which a single-step separating machine 5 is applied. The reason why the foregoing second separation step P22 is employed is that the fibrous material and the water absorption resin are, in small quantities, left and allowed to adhere to the surfaces of the external members 103 discharged from the two-step separating machine 3 through the upper conveyor belt 38 and the foregoing valuable substances must further be recovered. The separation method according to the second embodiment is arranged such that the second separation step P22 is added to the first embodiment; dry air allowed to pass through a dehumidifying machine 61 is introduced into the two-step separating machine 3 and the recovering machine 43; and a vibration screen 43c is disposed below the recovering machine 43. The other elements are substantially the same as the first embodiment.

The reason why dry air allowed to pass through the dehumidifying machine 61 is supplied to the two-step separating machine 3 and the recovering machine 43 is that water absorption by the water absorption resin 107 must be prevented in a case of rain or the like in which the atmospheric humidity is high. The reason why the vibration screen 43c is added to the recovering machine 43 is that fine fibrous material 108 allowed to adhere to the recovered water absorption resin 107 in a very small quantity must be removed to improve the purity of the water absorption resin 107.

The single-step separating machine 5 comprises a casing 51 elongated in the lateral direction; a rotational shaft 52 disposed in the casing 51 in the lengthwise direction and arranged to be rotatable around the axis thereof; a cylindrical mesh unit 53 for surrounding the rotational shaft 52; a conveyor belt 54 disposed below the cylindrical mesh unit 53; a conveyor belt 55 for discharging the external members 103 brought to the downstream end of the cylindrical mesh unit 53 to the outside of the system; and a conveyor belt 54 disposed below the cylindrical mesh unit 53. The rotational shaft 52 and the cylindrical mesh unit 53 are rotated in opposite directions by a drive means (not shown), while the conveyor belt 54 is rotated circularly by a drive means (not shown).

A plurality of stirring rods 52a are spirally disposed around the outer surface of the rotational shaft 52 in the lengthwise direction. The external members 103 supplied from the first separation step P21 through an upstream position into the cylindrical mesh unit 53 are struck and stirred by the stirring rods 52a so that the fibrous material allowed to adhere to the surfaces of the external members 103 are swept downwards due to striking and stirring, and then allowed to pass through the meshes of the cylindrical mesh unit 53 so as to be screened into the lower portion. The external members 103a brought to the downstream end of the cylindrical mesh unit 53 are discharged to the outside of the system by the conveyor belt 55.

To a portion corresponding to the downstream end of the conveyor belt 54 in the casing 51, there is connected a sixth air-flow pipe S6. The leading end of the sixth air-flow pipe S6 is connected to a space below the cylindrical mesh unit 33 of the two-step separating machine 3 provided in the first separation step P21. When a suction blower 46 disposed at an intermediate position of the sixth air-flow pipe S6 is operated, the atmosphere in the casing 51 is fed back to the space below the cylindrical mesh unit 33 in the two-step separating machine 3.

Therefore, the fibrous material, swept off due to striking of the external members 103 by the stirring rods 52a in the cylindrical mesh unit 53, is allowed to pass through the meshes of the cylindrical mesh unit 53, and then falls onto the conveyor belt 54. When the conveyor belt 54 is rotated circularly, the fibrous material is conveyed to the downstream end at which the fibrous material is, as the intermediate-grade fibrous material 106a, transported through the sixth air-flow pipe S6 with the air flow due to the suction force of the suction blower 46, followed by being fed back to the space below the cylindrical mesh unit 33 in the two-step separating machine 3 so as to be screened again by the circular-arc mesh unit 35.

By providing the second separation step P22 for the thus-arranged separation step P2, the fibrous material allowed to adhere to the external members 103 can be recovered. Therefore, the overall efficiency of the system in recovering valuable substances can be improved. Since dry air allowed to pass through the dehumidifying machine 61 is introduced into the two-step separating machine 3 and the recovering machine 43, the recovery ratio of the water absorption resin 107 can be improved even in a rain case in which the quantity of water in the air is large. Since the vibration screen 43c is added to the recovering machine 43, the purity of the water absorption resin 107 to be recovered can further be raised. To further improve the recovery ratio of the water absorption resin 107, it is preferable that dehumidified dry air or dry nitrogen gas be introduced into the overall system.

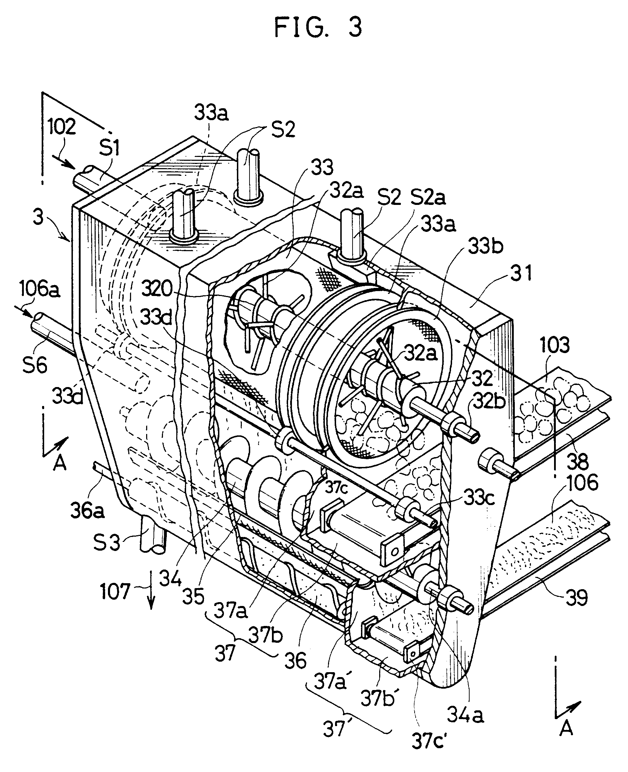

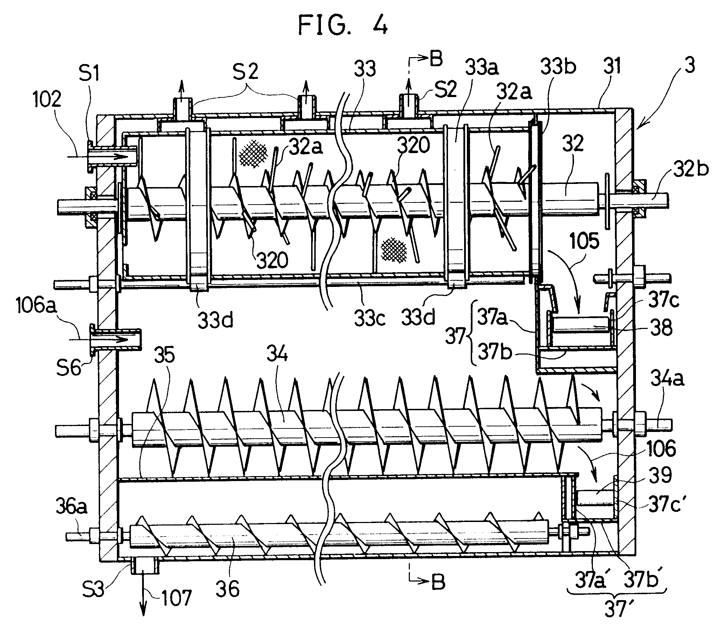

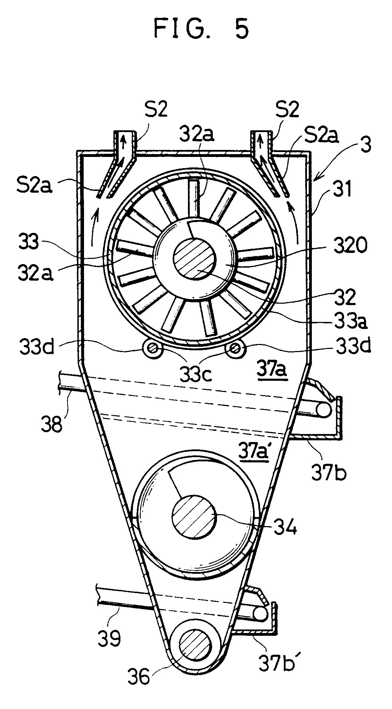

Referring to Figs. 3 to 8, the two-step separating machine and the single-step separating machine will now be described in detail. Fig. 3 is a partially-cut perspective view showing an example of the two-step separating machine. Fig. 4 is a cross sectional view taken along line A-A shown in Fig. 3. Fig. 5 is a cross sectional view taken along line B-B shown in Fig. 4. As shown in the foregoing drawings, in this embodiment, the casing 31 of the two-step separating machine 3 is in the form of a box-shape body elongated laterally and has the lower width which is reduced downwards like a funnel. A first airflow pipe S1 is connected to the upstream portion of the upper portion (the left-hand portion of the drawing) of the thus-structured rotational shaft 32. The cut members 102 are introduced into the casing 31 through the first air-flow pipe S1.

A rotational shaft 32 having a plurality of stirring rods 32a in the lengthwise direction is disposed in the upper portion in the casing 31 having the foregoing structure in such a manner that it is able to integrally rotated around a central shaft 32b. The rotational shaft 32 has, on the surface thereof, a spiral screw 320. Stirring rods 32a are provided on the screw 320 in such a manner that the adjacent stirring rods 32a are disposed at substantially the same intervals. The central shaft 32b is connected to a drive means (not shown). A concentric cylindrical mesh unit 33 is disposed to surround the rotational shaft 32 having the foregoing structure. The two side portions of the cylindrical mesh unit 33 are opened. Annular rails 33a, each having an annular groove formed in the surface thereof are attached adjacent to the two side portions in such a manner that the annular rails 33a are formed integrally with the cylindrical mesh unit 33.

On the other hand, a pair of right and left support shafts 33c extending in the lengthwise direction is disposed below the cylindrical mesh unit 33 in the casing 31. Pulleys 33d are concentrically provided for the portions corresponding to the annular rails 33a on the support shafts 33c. The size and positions of the pulleys 33d are determined to be capable of supporting the cylindrical mesh unit 33 in a state where the same are embedded in the annular grooves of the annular rails 33a.

A drive means (not shown) for rotating the pair of the support shafts 33c having the above structure in the same direction is disposed. When the support shafts 33c are rotated by the above drive means, the pulleys 33d are rotated around the support shafts 33c. As a result, the annular rails 33a slidably in contact with the pulleys 33d are rotated, thus causing the cylindrical mesh unit 33 disposed integrally with the annular rails 33a to be rotated. A sealing ring 33b having an annular sealing groove is integrally attached to the end of the cylindrical mesh unit 33 from outside. The internal end of a circular opening of an upper vertical wall 37a is received by the sealing groove of the sealing ring 33b. A rubber sealing member fixed with bolts is attached to the above internal end. The rubber sealing member and the sealing ring 33b seal between the outside and the inside of the casing 31.

A plurality of second air-flow pipes S2 are connected to the ceiling portion of the casing 31. The leading ends of the second air-flow pipes S2 are inserted into the casing 31 and have hoods S2a to easily suck the atmosphere in the casing 31.

An upper partition member 37 for sealing the cylindrical mesh unit 33 in the casing 31 is disposed in the casing 31 at a position downstream from the cylindrical mesh unit 33 (at a right-hand position in the drawing). The upper partition member 37 comprises the upper vertical wall 37a having an opening for receiving the cylindrical mesh unit 33 from outside and an upper horizontal floor 37b formed in the lower portion and extended from the upper vertical wall 37a.

Moreover, an upper conveyor belt 38 for discharging, to the outside of the casing 31, the separated external members 103, to be discharged through the opening formed downstream from the cylindrical mesh unit 33, is disposed at the downstream end of the cylindrical mesh unit 33. The upper conveyor belt 38 is stretched between rollers provided for brackets 37c on the upper horizontal floor 37b so as to be moved circularly by a drive means (not shown) in order to convey the external members 103 supplied onto the conveyor belt 38 to the outside of the system or to a next step.

A screw shaft 34 disposed below the cylindrical mesh unit 33 in the casing 31 is disposed so as to be capable of integrally rotating around a central shaft 34a disposed in the lengthwise direction of the casing 31 to pass through the both end portions of the casing 31. The central shaft 34a is arranged to be rotated around the axis thereof by a drive means (not shown). The rotation causes the screw shaft 34 to be rotated so that mixture of the water absorption resin and the fibrous material falling from the cylindrical mesh unit 33 is moved downstream and only the water absorption resin 107 is separated as substances obtained by screening performed by the circular-arc mesh unit 35.

A lower partition member 37' for sealing the screw shaft 34 in the casing 31 is disposed downstream from the screw shaft 34. The lower partition member 37' comprises a lower vertical wall 37a' and a lower horizontal floor 37b'. The lower vertical wall 37a' has a through hole through which spiral blades of the screw shaft 34 are projected.

The lower horizontal floor 37b' has a pair of brackets 37c' in an upright posture. The brackets 37c' have rollers A lower conveyor belt 39 is stretched between the rollers. The lower conveyor belt 39 is arranged to be moved circularly by a drive means (not shown) so that the intermediate-grade fibrous material 106 discharged from the downstream end of the screw shaft 34 is conveyed to the next step by the lower conveyor belt 39.

A lower screw shaft 36 is disposed below the circular-arc mesh unit 35. The lower screw shaft 36 is, as shown in Fig. 4, concentrically and integrally provided for a central shaft 36a arranged to pass through the left wall of the casing 31 and the lower vertical wall 37a'. The bottom surface of the casing 31 is formed into a circular arc shape having the size with which the outer surfaces of the blades of the lower screw shaft 36 are operable to come into sliding contact. A third air-flow pipe S3 is connected to the downstream end (the left-hand portion in the drawing) in the bottom portion of the casing 31.

Therefore, the water absorption resin 107 allowed to pass through the meshes of the circular-arc mesh unit 35 and fall onto the lower portion is moved downstream due to the rotations of the lower screw shaft 36, and then discharged to the next step through the third air-flow pipe S3 due to air flow transportation.

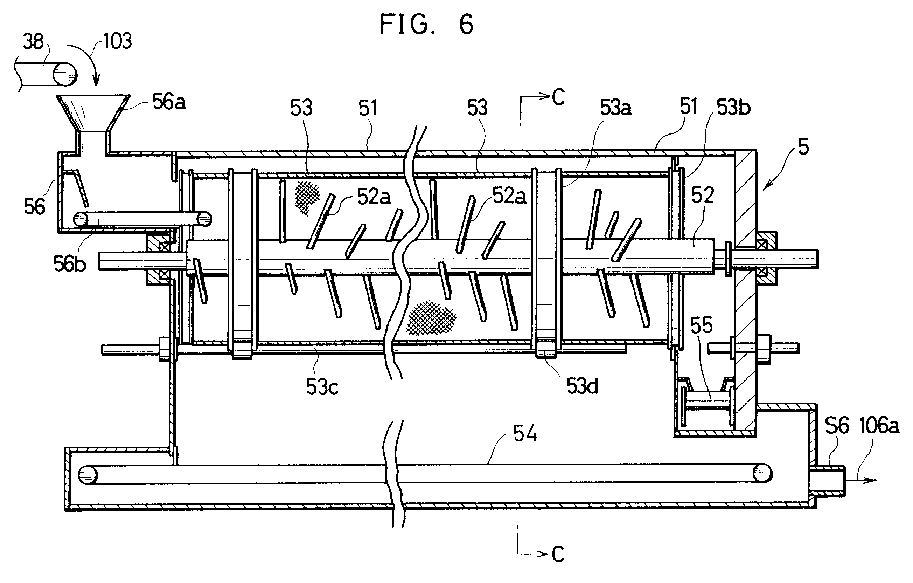

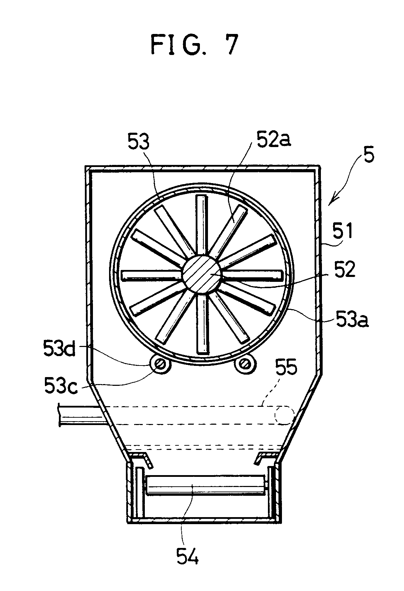

Fig. 6 is a horizontal cross sectional view showing an example of the single-step separating machine to be applied to the second embodiment. Fig. 7 is a cross sectional view taken along line C-C shown in Fig. 6. As shown in Figs. 6 and 7, the single-step separating machine 5 has a structure such that the screw shaft 34 and the circular-arc mesh unit 35 of the two-step separating machine 3 are removed so as to perform a separation process comprising only one step. That is, the casing 51 includes a rotational shaft 52 having stirring rods 52a similar to the rotational shaft 32. Moreover, a cylindrical mesh unit 53 similar to the cylindrical mesh unit 33 for surrounding the rotational shaft 52 is provided. The rotational shaft 52 is rotated by a drive means (not shown).

Also the structure for supporting the cylindrical mesh unit 53 in the casing 51 is arranged similarly to that according to the first embodiment such that it is supported by a pair of support shafts 53c in the widthwise direction disposed below the cylindrical mesh unit 53. Specifically, when pulleys 53d which are provided for the support shafts 53c and annular rails 53a and are attached to the cylindrical mesh unit 53 from outside, are brought into contact with each other and the support shafts 53c are rotated by a drive means (not shown), the cylindrical mesh unit 53 is, through the pulleys 53d, rotated in an opposite direction to the direction of rotation of the rotational shaft 52. A conveyor belt 55 for discharging the external members 103, from which the fibrous material allowed to adhere has been removed, to the outside of the system is disposed at the downstream end of the cylindrical mesh unit 53.

An external-member introducing portion 56 for introducing the external members 103a into the cylindrical mesh unit 53 of the single-step separating machine 5 is disposed upstream from the casing 31. A structure is different from that according to the first embodiment in that the separated external members 103 are, through the external-member introducing portion 56, introduced from the upper conveyor belt 38 of the two-step separating machine 3 into the cylindrical mesh unit 53.

Specifically, the external-member introducing portion 56 comprises a hopper 56a for receiving the external members 103 from the upper conveyor belt 38, a body disposed below the hopper 56a and having a hollow portion therein and a loading conveyor 56b disposed in the bottom portion of the body. When the loading conveyor 56b is driven circularly, the external members 103 brought from the upper conveyor belt 38 are introduced into the cylindrical mesh unit 53.

The external members 103 supplied into the cylindrical mesh unit 53 are, similarly to the foregoing embodiment, struck due to rotations of the stirring rods 52a around its axis in the cylindrical mesh unit 53. Thus, the fibrous material allowed to adhere to the surface is swept downwards. The fibrous material, which has been swept downwards, is allowed to pass through the meshes of the cylindrical mesh unit 53 so as to be screened downwards. The residual external members 103 are supplied from the opening at the downstream end of the cylindrical mesh unit 53 to the conveyor belt 55 so as to be discharged to the outside of the system due to the circular movement of the conveyor belt 55.

A conveyor belt 54 is disposed below the cylindrical mesh unit 53 in the casing 51. The fibrous material falling from above is received by the conveyor belt 54, followed by being conveyed downstream due to the circular operation. A sixth air-flow pipe S6 is connected to the downstream end in the lower portion of the casing 51. Air flow transportation realized due to operation of the suction blower 46 shown in Fig. 2 causes the fibrous material accumulated at the downstream end of the conveyor belt 54 to be, as the intermediate-grade fibrous material 106a, fed back to an intermediate position of the two-step separating machine 3.

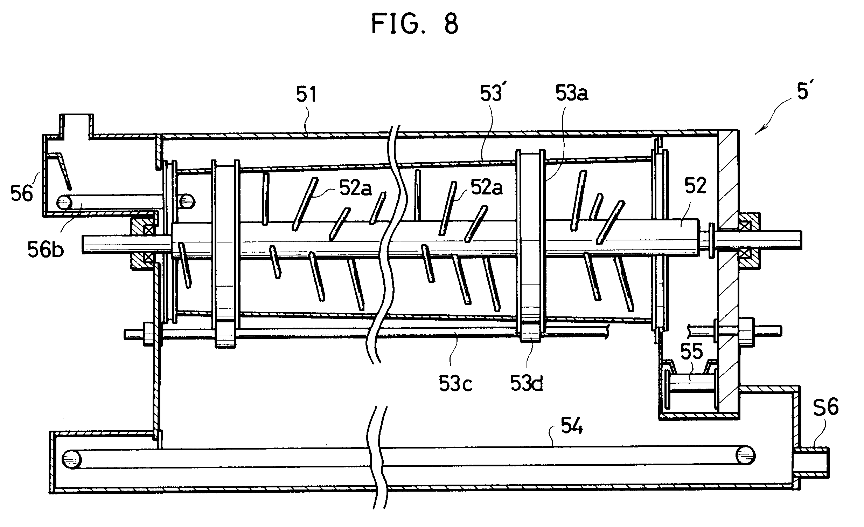

Fig. 8 is a horizontal cross sectional view showing another example of the single-step separating machine applied to the second embodiment. A single-step separating machine 5' according to this embodiment has the same structure as that of the single-step separating machine 5 according to the previous embodiment except the cylindrical mesh unit 53' being formed to expand from the upstream position toward the downstream position. By forming the cylindrical mesh unit 53' into the expanded shape, the external members 103 can easily be moved from the upstream position toward the downstream position.

### (Example of Operation)

By employing the separation method according to the second embodiment of the present invention, defectives of the articles to be worn, such as paper diapers, were processed in an actual scale. An apparatus having a processing capacity of 50 tons/day was used. Prior to performing the operation, the operation conditions for the two-step separating machine 3 were set. Specifically, the circumferential velocity of the stirring rods 32a of the two-step separating machine 3 was set to a value within a range of 2.0 to 25 m/sec, and the circumferential velocity of the cylindrical mesh unit 33 was set to a value within a range of 0.1 to 1.5 m/sec. Note that the reason why the circumferential velocity of the stirring rods 32a of the two-step separating machine 3 was set to the range of 2.0 to 25 m/sec was that if the circumferential velocity is lower than 2.0 m/sec, then the velocity is too low to reliably untangle the cut members 102 in the cylindrical mesh unit 33. If the velocity is higher than 25 m/sec, the cut members 102 entwined around the stirring rods 32a cannot be removed. Thus, the cut members 102 cannot reliably be moved downstream, thus resulting in a clogging phenomenon taking place in the cylindrical mesh unit 33. If the velocity is considerably high, the cut members 102 in a state where they are not untangled are allowed to pass through the cylindrical mesh unit 33 and moved to the upper conveyor belt 38, resulting in a liability that no separation may take place.

The circumferential velocity of the screw shaft 34 in the two-step separating machine 3 was set to a value within a range of 0.1 to 3 m/sec. The reason why the above value was employed is that if the circumferential velocity of the blades of the screw shaft 34 is set to be 0.1 m/sec or lower, then the fibrous material cannot reliably be moved on the circular-arc mesh unit 35. If the circumferential velocity is higher than 3 m/sec, the circular-arc mesh unit 35 can easily be broken due to quick sliding between the blades and the circular-arc mesh unit 35. The circumferential velocity of the blades of the lower screw shaft 36 was set to be a value within a range of 0.1 to 2.5 m/sec.

The circumferential velocity of the stirring rods 52a of the single-step separating machine 5 was set to be a value within a range of 2.0 to 25 m/sec. The reason why the above setting was performed is the same as the above. The circumferential velocity of the cylindrical mesh unit 53 was set to be 0.05 to 3 m/sec.

After the foregoing operation conditions were set, each unit was operated so that the process for separating and recovering the defectives 101 of paper diapers or the like was performed. As a result, 2 to 5 tons of the water absorption resin 107 were recovered from 50 tons of the defectives 101, 5 to 8 tons of the high-grade fibrous material 105 were recovered, 18 to 22 tons of the intermediate-grade fibrous material 106 were recovered and 25 to 15 tons of the external members 103 were recovered. The total recovery ratio was 100 %.

The purity of the recovered water absorption resin 107 was 99.9 wt%, the purity of the high-grade fibrous material 105 was 99.9 wt% and the purity of the intermediate-grade fibrous material 106 was 99.0 wt%. As a result, confirmations were performed that the water absorption resin 107 and the high-grade fibrous material 105, which were recovered substances, could be used as new substances and also the intermediate-grade fibrous material 106 could be used as the raw material for manufacturing sanitary napkins. Thus, it can be understood that the present invention is able to realize a significant advantage.

### Exploitation in Industry

As described above, the present invention enables the water absorption members and fibrous material, which are valuable substances, to efficiently and reliably be recovered from defectives, such as paper diapers, in each of which the water absorption member is enclosed in the external member. By using the recovered substances, the serviceable source can effectively be used. Thus, significant advantages can be realized in effectively using the source and maintaining the environment on the earth.

## Claims

1. A separation and recovery apparatus which untangles material composed of a first component having first size and a second component having size larger than said size of said first component so as to separate and recover substances which can be reclaimed, said separation and recovery apparatus comprising: a cylindrical mesh unit rotatably disposed in a substantially horizontal direction; drive means for rotating said cylindrical mesh unit in a predetermined direction; stirring means disposed in said cylindrical mesh unit; a material supply unit for supplying said material from an end of said cylindrical mesh unit into said cylindrical mesh unit; a first separated-substance recovery unit for recovering first separated-substances from another end of said cylindrical mesh unit; and a second separated-substance recovery unit for recovering second separated-substances allowed to pass through meshes of said cylindrical mesh unit.

2. A separation and recovery apparatus according to claim 1 further comprising: a casing for surrounding said cylindrical mesh unit; suction means for sucking air in said casing; and a rotational shaft disposed concentrically to pass through said cylindrical mesh unit and made to be rotatable around an axis thereof, wherein said stirring means has a plurality of stirring rods radially provided for said rotational shaft to run the full length of said rotational shaft in the lengthwise direction of said rotational shaft, and said casing has a material loading port for loading said material to an upstream position in said cylindrical mesh unit, and is provided with, at downstream positions, a first separated-substance discharge port for discharging said first separated substances and a second separated-substance discharge port for discharging said second separated substance allowed to pass through said meshes of said cylindrical mesh unit.

3. A separation and recovery apparatus according to claim 2, wherein said casing includes a screw shaft disposed below said cylindrical mesh unit and capable of rotating around an axis thereof, a circular-arc mesh unit arranged to run the full length of said screw shaft so as to be slidable and in contact with the lower portion of said screw shaft and conveyance means disposed below said circular-arc mesh unit, said second separated-substance discharge port is formed at a downstream end of said circular-arc mesh unit, size of meshes of said circular-arc mesh unit is set to be smaller than size of meshes of said cylindrical mesh unit, and said casing has a third separated-substance discharge port for discharging third separated-substances allowed to pass through said meshes of said cylindrical mesh unit and conveyed by said conveyance means.

4. A separation and recovery apparatus according to claim 3, wherein said stirring rods are spirally disposed around the outer surface of said rotational shaft.

5. A separation and recovery apparatus according to claim 3 or 4, wherein the circumference of said rotational shaft is longer than the length of said material.

6. A separation and recovery method of untangling material composed of a first component having first size and a second component having size larger than said size of said first component so as to separate and recover substances which can be reclaimed, said separation and recovery method comprising the steps of: supplying said material to a cylindrical mesh unit which is being rotated and which is disposed in a substantially horizontal direction from an end of said cylindrical mesh unit through a material supply unit; separating said material into first separated substances to be left in said cylindrical mesh unit and second separated substances to be allowed to pass through meshes of said cylindrical mesh unit while stirring said material due to rotations of said cylindrical mesh unit in a predetermined direction and stirring means disposed in said cylindrical mesh unit; recovering said first separated substances from another end of said cylindrical mesh unit by a first separated-substance recovery unit; and recovering said second separated substances by a second separated-substance recovery unit.

7. A separation and recovery method according to claim 6 further comprising a preliminary processing step for subjecting said material, which is loaded into said cylindrical mesh unit, to a preliminary processing; a separation step for separating said material by said cylindrical mesh unit; and a recovery step for recovering said first separated substances and said second separated substances separated in said separation step, wherein, in said preliminary processing step said material and external members covering said material are cut to have predetermined size and cut substances are introduced into said separation step by air flow transportation, in said separation step said cut substances are loaded from an end of said cylindrical mesh unit to separate said cut substances into first separated substances mainly composed of said first component and second separated substances composed of said second component and said external member, and then said second separated substances obtained by the separation are further screened to remove said second component mixed with said second separated substances, and in said recovery step said first component and said second component separated in said separation step are individually taken out by air flow transportation so as to be recovered by collecting means.

8. A separation and recovery method according to claim 7, wherein said first component discharged from said cylindrical mesh unit and allowed to adhere to said cut substances of said external members is separated and fed back to said separation step by air flow transportation.

9. A separation and recovery method according to any one of claims 6 to 8, wherein said stirring means comprises a rotational shaft which rotates around an axis thereof and a plurality of stirring rods spirally provided for said rotational shaft to run the full length of said rotational shaft in the lengthwise direction of said rotational shaft, circumferential velocity of said stirring rods is set to be within a range of 2.0 to 25 m/sec and circumferential velocity of said cylindrical mesh unit is set to be within a range of 0.1 to 1.5 m/sec.
